# DEMANDE DE BREVET EUROPEEN

(11) **EP 3 142 054 A1**
(43) Date de publication de la demande: **15.03.2017**
(21) Numéro de dépôt: 16187144.7
(22) Date de dépôt: 02.09.2016
(51) Int. Cl.: G06Q 20/20, G06Q 20/32, G06Q 20/34, G06Q 20/42

(54) **PROCÉDÉ DE TRANSMISSION DE DONNÉES, DISPOSITIFS ET PROGRAMMES D'ORDINATEUR CORRESPONDANTS**

(30) Priorité: 11.09.2015 FR 1558451
(71) Demandeur: Ingenico Group, 75015 Paris (FR)
(72) Inventeur: DUCROHET, Vincent, 78210 SAINT CYR L'ECOLE (FR)
(74) Mandataire: Vidon Brevets & Stratégie

(57) **Abrégé**

L'invention se rapporte à un procédé de transmission d'un message, ledit message émanant d'un serveur (SvrM) d'un commerçant (Mct), lequel souhaite transmettre cette information à un utilisateur (Usr) disposant d'un terminal de communication (CT). Selon ce procédé, ledit message est transmise audit terminal de communication (CT) de manière indirecte en utilisant au moins un service de transmission de données propre à un serveur (SvrlBK) d'un établissement bancaire (IssuBK) auprès duquel ledit utilisateur (Usr) possède un compte bancaire.

## Description

### 1. Domaine

La technique proposée se rapporte à la transmission de données à des utilisateurs par des commerçants. La technique proposée se rapporte plus spécifiquement à la transmission, aux à un utilisateur, par un commerçant, de données représentatives d'une information relative à un achat effectué par l'utilisateur auprès du commerçant.

### 2. Art Antérieur

La communication entre un commerçant et un utilisateur est un élément indispensable pour réaliser un achat. Le commerçant doit d'abord communiquer son offre (un produit matérialisé ou immatérialisé, et un prix). L'utilisateur donne son acception et effectue le paiement, par exemple en utilisant sa carte bancaire. Par la suite, le commerçant fournit un reçu sous forme d'un ticket qui indique le montant du paiement et le produit ou le service acheté. Ce reçu, d'une part, permet de confirmer le montant réellement facturé et de justifier l'achat, et d'autre part permet au commerçant de donner à l'utilisateur des informations sur le produit effectivement acheté.

Le reçu est un support d'informations qui se trouve être sous une forme papier. Les commerçants doivent être équipés d'une imprimante ou d'un terminal intégrant une imprimante pour imprimer ces reçus. L'achat et la maintenance des imprimantes ou des terminaux représente une charge supplémentaire pour les commerçants. En outre, l'utilisation massive de papiers pose un problème écologique.

Pour certains types de ventes (par exemple les ventes en ligne), les reçus sont souvent sous forme électronique. Après un achat, le commerçant envoie un reçu ou une confirmation de la commande à l'utilisateur par courrier électronique (email). Pour ce faire, le commerçant doit soit maintenir une base de données des coordonnées des utilisateurs, soit demander à l'utilisateur de fournir son adresse de courrier électronique pour chaque achat. La maintenance d'une base de données de ce type (inscription, désinscription, modification, etc.) est complexe et coûteux pour les commerçants. Par ailleurs, les utilisateurs doivent mettre à jour leurs coordonnées auprès des commerçants, ce qui est problématique dans certains cas de figure. En outre, les utilisateurs doivent s'identifier auprès des systèmes des commerçants. Cela entraine un délai supplémentaire gênant, en particulier pour les achats rapides.

Par ailleurs, les modes de ventes de produits ou de services évoluent et permettent à des utilisateurs de réaliser des achats de manière simplifiée. Ces modes de ventes ont des points communs :
- rapidité de choix de produit et de paiement ciblant l'achat impulsif ;
- capacité à effectuer des transactions avec des forts pics d'utilisation ;
- point de vente réduit au maximum pour être déployé rapidement et dans des environnements disparates ;
- point de vente réduisant le coût global de possession (TCO) ;

Pour couvrir l'ensemble de ces points de vente, il est possible d'intégrer du paiement dans un écran tactile par exemple. La solution finale permettra de réaliser une application sur l'écran pour la sélection du produit et le terminal de paiement pour payer en sans contact, NFC ou autre moyen de paiements électroniques. Dans ces cas d'usage, il est nécessaire de fournir un reçu (ticket) après chaque achat des utilisateurs. En effet, pour les achats des produits dématérialisés (par exemple, une séance de cinéma), il est nécessaire d'indiquer les informations qui permettent aux utilisateurs d'accéder aux produits (horaire, salle et place). Pour les achats des produits matérialisés, il est nécessaire d'indiquer des moyens permettant aux utilisateurs de récupérer les produits ou de fournir leurs adresses pour les envois des produits.

Pour les questions de coûts, de maintenance (papier) et de temps d'attente, la solution avec les reçus imprimés ne s'adapte pas au déploiement massif des points de vente. La solution avec les reçus électroniques préalablement décrite pour les achats en ligne permet de dématérialiser les reçus et d'éviter l'utilisation des imprimantes. Cependant, elle nécessite les dispositifs d'entrée (pour identifier les utilisateurs ou pour entrer les coordonnées) et/ou la maintenant des bases de données des coordonnées des utilisateurs. Ce qui entraine un délai supplémentaire (délai pour l'identification des utilisateurs ou d'entrée des coordonnées) pour les achats, et un coût supplémentaire pour les équipements. Par ailleurs, dans le cas où l'utilisateur doit entrer ses coordonnées, il y a un risque de divulgation et/ou d'utilisation abusive de par les commerçants.

Il existe donc un besoin de fournir une solution qui permet de communiquer des informations aux utilisateurs après les achats, qui réponde aux problèmes de complexité, de coût, de rapidité et de sécurité.

### 3. Résumé

La technique proposée ne présente pas au moins certains des problèmes de l'art antérieur. Plus particulièrement, la technique proposée se rapporte à un procédé de transmission d'un message, ledit message émanant d'un serveur d'un commerçant, lequel souhaite transmettre ce message à un utilisateur disposant d'un terminal de communication, ledit procédé étant caractérisé en ce que au moins une partie du contenu dudit message est transmis audit terminal de communication de manière indirecte en utilisant au moins un service de transmission de données propre à un serveur d'un établissement bancaire auprès duquel ledit utilisateur possède un compte bancaire.

Ainsi, le procédé réutilise l'infrastructure existante des établissements financière pour transmettre des données émanant d'un commerçant aux utilisateurs. Il n'est plus nécessaire pour les commerçants de disposer les coordonnées des utilisateurs afin de leurs transmettre des données.

Selon une caractéristique particulière, ledit service de transmission de données met en oeuvre un numéro de téléphone dudit utilisateur.

Selon une caractéristique particulière, ledit service de transmission de données met en oeuvre une application de l'établissement bancaire, ladite application étant installée sur un terminal de communication dudit utilisateur.

Selon un mode de réalisation particulier, ledit service de transmission de données est de type « 3D-Secure ™ » Ainsi, le procédé peut être utilisé pour la plupart des établissements financières puisque le service 3D-Secure est largement déployé par les établissements financière.

Selon un mode de réalisation particulier, ledit procédé comprend les étapes suivantes, exécutées postérieurement à une étape de réception d'une confirmation d'une transaction financière, transaction financière effectuée entre ledit établissement bancaire dudit utilisateur et un établissement bancaire dudit commerçant :
- une étape de transmission, à un serveur dudit commerçant, d'une requête d'obtention dudit message ;
- une étape de réception, en provenance dudit serveur dudit commerçant, d'une réponse contenant ledit message ;
- une étape de transmission, audit terminal de communication dudit utilisateur, d'un deuxième message comprenant au moins une partie du contenu dudit message.

Ainsi, le procédé de transmission est déclenché par une transaction effectuée par un utilisateur. Cela permettre de transmettre un message à un utilisateur, chaque fois après une transaction effectuée par l'utilisateur.

Selon une caractéristique particulière, ladite confirmation comprend un identifiant dudit commerçant et un identifiant de ladite transaction.

Ainsi, l'établissement bancaire de l'utilisateur peut identifier le commerçant et la transaction. La communication avec le serveur du commerçant.

Selon une caractéristique particulière, ledit identifiant dudit commerçant comprend une adresse IP ou une adresse URL du serveur dudit commerçant.

Ainsi, le serveur de l'établissement bancaire de l'utilisateur peut initialiser une communication sur internet avec le serveur du commerçant.

Selon un mode de réalisation particulier, ledit message est transmis audit utilisateur sous une forme adaptée au dispositif de communication recevant ce message.

Dans un autre mode de réalisation, la technique se rapporte également à un serveur d'un établissement bancaire pour transmettre un message, ledit message émanant d'un commerçant, lequel souhaite transmettre cette information à un utilisateur disposant d'un terminal de communication, ledit serveur comprenant :
- un module de transmission, d'une requête de ladite donnée, à un serveur dudit commerçant ;
- un module de réception, en provenance dudit serveur dudit commerçant, de ladite donnée ;
- un module de transmission de ladite donnée audit terminal de communication dudit utilisateur.

Dans un autre mode de réalisation, la technique se rapporte également à un procédé de transmission d'un message de manière indirecte à un utilisateur en utilisant au moins un service de transmission de donnée propre à un serveur d'un établissement bancaire auprès duquel ledit utilisateur possède un compte bancaire, ledit procédé comprenant :
- une étape de réception, en provenance d'un serveur dudit établissement bancaire dudit utilisateur, d'une requête de ladite donnée ;
- un module de transmission de ladite donnée audit serveur dudit établissement bancaire dudit utilisateur.

Dans un autre mode de réalisation, la technique se rapporte également à un serveur d'un commerçant pour transmettre une message de manière indirecte à un utilisateur en utilisant au moins un service de transmission de donnée propre à un serveur d'un établissement bancaire auprès duquel ledit utilisateur possède un compte bancaire, ledit serveur comprenant :
- un module de réception, en provenance d'un serveur dudit établissement bancaire dudit utilisateur d'une requête de ladite donnée ;
- un module de transmission de ladite donnée audit serveur dudit établissement bancaire dudit utilisateur.

Selon une implémentation préférée, les différentes étapes des procédés selon la technique proposée sont mises en oeuvre par un ou plusieurs logiciels ou programmes d'ordinateur, comprenant des instructions logicielles destinées à être exécutées par un processeur de données d'un module relais selon la technique proposée et étant conçu pour commander l'exécution des différentes étapes des procédés.

En conséquence, la technique proposée vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La technique proposée vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon la technique proposée peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, la technique proposée est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en oeuvre ses propres modules logiciels.

Les différents modes de réalisation mentionnés ci-dessus sont combinables entre eux pour la mise en oeuvre de la technique proposée.

### 4. Figures

D'autres caractéristiques et avantages apparaîtront plus clairement à la lecture de la description suivante d'un mode de réalisation particulier de la divulgation, donné à titre de simple exemple illustratif et non limitatif, et des dessins annexés, parmi lesquels :
- la figure 1 est un diagramme de séquence du procédé selon la technique proposée ;
- la figure 2 illustre les étapes nécessaires d'un procédé de communication mises en oeuvre par la banque de l'utilisateur ;
- la figure 3 illustre les étapes nécessaires d'un procédé de communication mises en oeuvre par le commerçant ;
- la figure 4 est une représentation simplifiée d'un système d'une banque permettant de mettre en oeuvre un procédé de communication ;
- la figure 5 est une représentation simplifiée d'un serveur d'un commerçant permettant de mettre en oeuvre un procédé de communication.

### 5. Description

### 5.1. Principe général

Dans l'état de la technique, il est complexe et coûteux pour les commerçants de transmettre directement, à leurs utilisateurs clients (appelés par la suite utilisateurs ou clients pour plus de simplicités), des messages relatifs à des achats effectués ou d'autres informations, du fait de la difficulté et la complexité de la maintenance et/ou l'obtention des coordonnées des utilisateurs. Un objet de la présente technique est de permettre aux commerçants de transmettre à leurs clients des informations, de marinière simple, économique et sécurisée. La présente technique permet par exemple de résoudre le problème de transmission d'information à un utilisateur lorsque le terminal qui est utilisé pour effectuer un achat (terminal de paiement) ne dispose pas d'imprimante (pour attester de la matérialité de l'achat d'une part et du montant payé d'autre part). Ceci est par exemple le cas de nouveaux types de terminaux, qui peuvent être appelés terminaux intégrés (par exemple à des objets tiers, tels que des écrans tactiles ou non). Un terminal est alors par exemple intégré au sein d'un panneau d'affichage, qui peut être muni d'un écran d'affichage numérique (LCD) et devant lequel un ou plusieurs messages sont affichés. Ces messages peuvent par exemple demander à des individus de réaliser un don pour une association caritative, une fondation, ou réaliser un achat de bien ou de service, etc. Un terminal autonome peut également être un distributeur de boisson, de friandise, etc.

Dans ce type de terminal, le moyen de paiement mis en oeuvre est généralement sans contact : il peut s'agir d'une carte de paiement sans contact ou d'un terminal de communication muni d'une interface sans contact. Pour réaliser un don ou un achat, l'utilisateur doit juste présenter son moyen de paiement sans contact devant le terminal intégré. Le terminal intégré lit les données sans contact (les données de la carte bancaire par exemple) et transmet ces données à un serveur de transaction qui gère le débit du compte de l'utilisateur au niveau de la banque émettrice de la carte bancaire. Un problème est que l'utilisateur n'est pas informé de manière immédiate du montant de la transaction. La présente technique permet de résoudre ce problème. Un autre problème, également résolu par la présente technique, est que l'opérateur du terminal de paiement intégré (le commerçant) ne peut pas informer l'utilisateur (par exemple pour le remercier dans le cadre d'un don). Pour résoudre ce problème, et d'autres plus généraux concernant la communication entre un utilisateur client et un commerçant, la présente technique utilise une architecture existante (celle du réseau bancaire), pour établir cette communication entre l'utilisateur et le commerçant et ce, sans nécessiter de saisie de données par l'utilisateur.

Le principe général de la technique proposée consiste donc à tirer profit des systèmes des établissements bancaires existants dans l'état de la technique. En effet, les établissements bancaires maintiennent, pour leurs propres besoins, des bases de données comprenant les coordonnées de leurs clients, afin de communiquer avec eux si nécessaire. Par exemple, la technique de paiement en ligne « *3D Secure* » nécessite que l'établissement bancaire connaisse le numéro de téléphone de son client afin de pouvoir transmettre à ce dernier un « défi » prouvant l'identité de l'utilisateur qui tente de payer par carte bancaire (le défi étant un code à saisir dans un champ déterminé d'une page web). Ainsi, la technique proposée consister à transmettre des données représentatives d'informations émanant des commerçants (des messages de sécurité, des messages commerciaux, des messages d'information), de manière indirecte, aux utilisateurs, en utilisant un service de transmission de données propre à un serveur d'un établissement bancaire auprès duquel ledit utilisateur possède un compte bancaire.

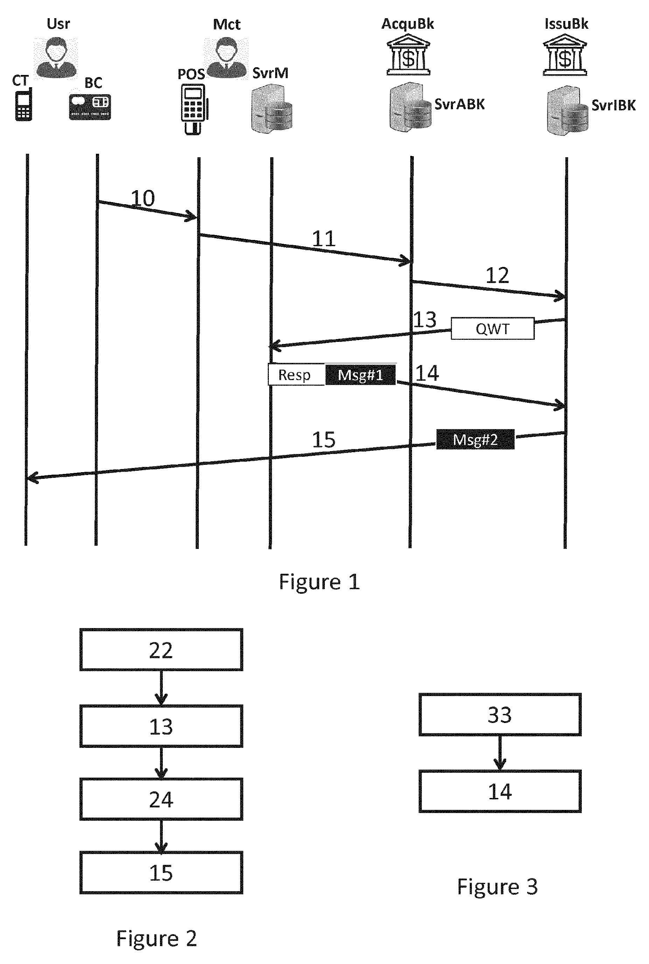

Les principales étapes de la technique sont illustrées en relation avec la figure 1. Les participants du procédé illustré dans la figure 1 sont : un utilisateur Usr muni d'un terminal de communication CT et d'une carte bancaire BC; un commerçant Mct muni d'un terminal de paiement POS et un serveur SvrM ; une banque acquéreur IssuBK qui est un établissement bancaire auprès duquel le commerçant possède un compte bancaire; et une banque émettrice AcquBK qui est un établissement bancaire auprès duquel l'utilisateur possède un compte bancaire. Quand l'utilisateur Usr réalise un achat auprès d'un commerçant Mct, il effectue 10 le paiement en utilisant par exemple une carte bancaire BC sur le terminal de paiement POS du commerçant Mct. Le terminal de paiement POS du commerçant Mct transmet 11 une requête de transaction à un serveur SvrABK de transaction de l'établissement bancaire (banque acquéreur AcquBK) du commerçant. La requête de transaction comprend notamment des informations représentative du compte bancaire et/ou de la carte bancaire de l'utilisateur (et donc de la banque émettrice IssuBK) et le montant du produit acheté par l'utilisateur. Le serveur de l'établissement bancaire du commerçant SvrABK (banque acquéreur AcquBK) valide cette transaction (soit en requérant une autorisation auprès d'un serveur bancaire SvrlBK de la banque de l'utilisateur IssuBK soit de manière autonome) et transmet 12 une confirmation de la transaction à ce serveur de l'établissement bancaire SvrlBK de la banque émettrice IssuBK. La confirmation de la transaction peut comprendre notamment un identifiant du commerçant et un identifiant (ou un numéro) de la transaction. L'identifiant du commerçant peut comprendre une adresse IP ou une adresse URL (ou URI) du serveur SvrM du commerçant Mct. Cet identifiant du commerçant permet, selon la présente technique, aux banques (banque émettrice IssuBK) des utilisateurs d'initialiser une communication avec le commerçant Mct.

Les serveurs SvrABK et SvrlBK de la technique proposée peuvent être des nouveaux serveurs dédiés pour l'implémentation de la technique proposée. De manière préférentielle, ils peuvent également prendre la forme de modules spécifiques de serveurs de traitement de transaction. Ainsi, il n'est pas nécessaire de modifier l'architecture technique existante.

Après avoir reçu une confirmation de la transaction, un serveur SvrlBK de la banque de l'utilisateur (banque émettrice IssuBK) transmet 13, au serveur SvrM du commerçant Mct, une requête (QWT) d'obtention d'un message (Msg#1) destiné à être transmis à l'utilisateur.

En réponse à la requête QWT, le serveur SvrM du commerçant Mct transmet 14, au serveur SvrlBK de l'établissement bancaire de l'utilisateur (banque émettrice IssuBK), une réponse (Resp) comprenant un message à transmettre à l'utilisateur. La requête transmise par le serveur SvrlBK de l'établissement bancaire de l'utilisateur (banque émettrice IssuBK) peut comprendre l'identifiant de la transaction préalablement effectuée et/ou un identifiant de l'utilisateur (par exemple un Hashé du numéro de carte bancaire). Le serveur du commerçant Mct peut identifier l'achat correspondant de l'utilisateur à partir de l'identifiant de la transaction ou du hashé du numéro de carte bancaire de l'utilisateur ou encore d'un jeton (token). Il peut ensuite générer le message contenant l'information qu'il souhaite transmettre (ce message n'étant pas nécessairement lié à l'achat) et placer ce message (Msg#1) dans la réponse (Resp) à la requête (QWT). L'information à transmettre correspond par exemple au montant total de l'achat effectué par l'utilisateur Usr, ou à d'autres aspects.

Par exemple, le serveur SvrM du commerçant Mct peut communiquer avec le terminal de paiement POS et/ou peut disposer d'une base de données comprenant des informations sur tous les achats auprès du commerçant Mct et des informations sur les transactions bancaires correspondantes. L'information générée par le serveur SvrM du commerçant Mct, à destination de l'utilisateur Usr, peut être un message informatif sur un achat, une preuve d'achat, et/ou un message commercial, un message de sécurité (par exemple du compte de l'utilisateur). Cette dernière possibilité est particulièrement intéressante : la diffusion d'un message de sécurité par cette architecture est efficace et sure, car l'infrastructure bancaire de diffusion de message est elle-même sécurisée. Ainsi, la présente technique augmente le niveau de sécurité général de transmission de message entre un commerçant et un utilisateur. Le message à transmettre à l'utilisateur peut prendre la forme d'une image, d'un texte, d'un code 1D ou 2D, ou d'une URL comprenant de telles informations.

Après avoir reçu le message Msg, le serveur extrait, de celui-ci, son contenu (par exemple s'il s'agit d'un texte).. À partir de ce contenu (au moins une partie de ce contenu), le serveur SvrlBK de l'établissement bancaire de l'utilisateur (banque émettrice IssuBK) créé son propre message (deuxième message) Msg#2 et le transmet 15 à l'utilisateur. Ce deuxième message Msg#2 est transmis par exemple via SMS ou MMS (à un terminal de communication CT de l'utilisateur Usr) ou encore par l'intermédiaire d'une notification d'application mobile. Le deuxième message Msg#2 peut également être transmis par email ou en utilisant une application (application de la banque installée sur un terminal de communication de l'utilisateur) ou une autre application de communication. L'utilisateur Usr peut ainsi être informé des informations sur le don, le produit ou le service qu'il a acheté. Dans le cas de l'utilisation d'une application bancaire, la chaine de sécurisation de la transmission du message est conservée : en effet la transmission d'une notification par l'application bancaire utilise un canal sécurisé de transmission de messages qu'il est difficile de pénétrer et de frauder. Dès lors, l'information transmise par le commerçant (et reçue par l'utilisateur) dispose d'une fiabilité importante.

Ainsi, *sans que la banque n'ait besoin de divulguer des informations confidentielles de son client (i.e., numéro de téléphone, adresse de courrier électronique, etc.),* le commerçant peut entrer en contact avec celui-ci et lui transmettre des données qu'il ne peut pas habituellement transmettre (car il ne possède pas d'information sur l'utilisateur) ou qu'il ne veut pas transmettre en utilisant une architecture de gestion de données client complexe et couteuse.

### 5.2. Serveur de l'établissement bancaire de l'utilisateur (banque émettrice)

L'établissement bancaire IssuBK de l'utilisateur Usr dispose un serveur SvrlBK qui permet de mettre en oeuvre un procédé de transmission d'un message à un terminal de communication CT de l'utilisateur Usr. Le procédé mis en oeuvre par le serveur SvrlBK de l'établissement bancaire Issu BK de l'utilisateur Usr comprend les étapes suivantes :
- une étape de réception 22, d'une confirmation d'une transaction financière ; cette transaction financière a été effectuée entre un serveur de traitement de transaction de l'établissement bancaire IssuBK de l'utilisateur et un serveur de transaction d'un établissement bancaire AcquBK du commerçant ; cette confirmation peut comprendre un identifiant du commerçant Mct comprenant une adresse IP ou une adresse URL d'un serveur SvrM du commerçant Mct, et permettant à un serveur SvrlBK de l'établissement bancaire IssuBK de l'utilisateur d'initialiser une communication avec le serveur SvrM du commerçant Mct ; la confirmation peut également comprendre un identifiant (ou numéro) de la transaction ; en effet, le commerçant Mct dispose également cet identifiant de transaction dans son serveur SvrM pour des vérifications ou des contrôles financiers ou légaux éventuels.
- une étape de transmission 13, au serveur SvrM du commerçant Mct, d'une requête de la d'obtention de message; le contenu de ce message est destiné à être transmis à un terminal de communication CT de l'utilisateur ; la requête peut comprendre l'identifiant de la transaction ; en effet, le commerçant Mct dispose d'une base de données qui comprend les informations sur les achats et les transactions bancaires correspondantes ; l'identifiant de la transaction permet ainsi, selon la présente technique, au commerçant Mct d'identifier l'achat ou les achats correspondants à la transaction et de générer un message correspondant à l'achat ou les achats effectués par l'utilisateur ;
- une étape de réception 24, en provenance du serveur SvrM du commerçant Mct, du message généré par le commerçant ; le message en question n'est pas nécessairement lié à l'achat; il peut l'être mais il peut également s'agir d'autres messages (par exemple un message de sécurité se rapportant au compte de l'utilisateur chez le commerçant) ; ce type de transmission de message est avantageux car il permet de bénéficier d'un canal de transmission sécurisé : celui de l'établissement bancaire ;
- une étape de transmission 15 du contenu du message précédemment reçu au terminal de de communication CT de l'utilisateur ; le contenu du premier message est inséré dans un deuxième message, lequel est transmis à l'utilisateur par l'intermédiaire du canal bancaire ; ce deuxième message est transmis au nom du commerçant Mct.

Ainsi, la transmission de données représentatives des informations sur les achats des utilisateurs est assurée par un service de transmission des établissements bancaires des utilisateurs. Il n'est ainsi pas nécessaire pour les utilisateurs de saisir leurs coordonnées ou de s'identifier lors des achats auprès des commerçants (ce qui simplifie l'achat effectué à l'aide d'un terminal intégré). En outre, les coordonnées des utilisateurs sont conservées par les banques et ne sont pas accessibles pour les commerçants. La sécurité des coordonnées des utilisateurs est ainsi garantie. Cela permet d'éviter les utilisations abusives de ces coordonnées par les commerçants (campagnes publicitaires).

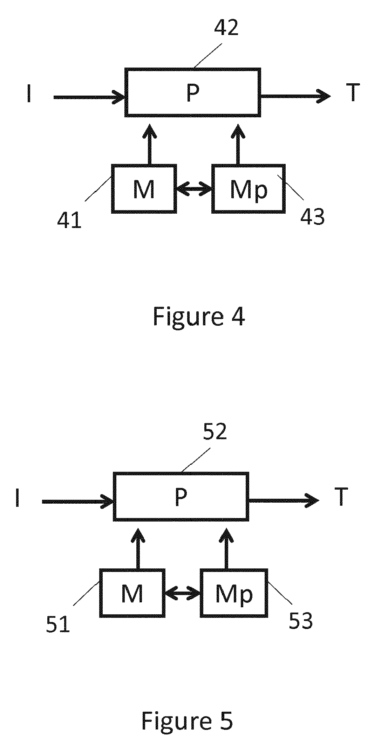

La figure 4 illustre une architecture matérielle du serveur SvrlBK de l'établissement bancaire de l'utilisateur Usr. Cette architecture matérielle comprend un mémoire 41 constituée d'une mémoire tampon, une unité de traitement 42, équipée par exemple d'un microprocesseur, et pilotée par le programme d'ordinateur 43, mettant en oeuvre les étapes nécessaires du procédé de communication telle que décrites préalablement. A l'initialisation, les instructions de code du programme d'ordinateur 43 sont par exemple chargées dans une mémoire avant d'être exécutées par le processeur de l'unité de traitement 42. Le microprocesseur de l'unité de traitement 42 met en oeuvre les étapes du procédé de transmission préalablement décrite, selon les instructions du programme d'ordinateur 42. Pour cela, le serveur de l'établissement bancaire SvrlBK de l'utilisateur Usr comprend :
- un module de transmission, à un serveur SvrM d'un commerçant Mct, d'une requête d'obtention d'un message à transmettre. Ce message est destiné à être transmis à un terminal de communication CT d'un utilisateur Usr du commerçant Mct ;
- un module de réception de messages, en provenance du serveur SvrM du commerçant Mct ; il peut s'agir d'un module général de réception de messages ;
- un module de transmission d'un message comprenant ladite donnée au terminal de communication CT de l'utilisateur Usr ; il peut s'agir d'un module général de transmission de messages.

Ces modules peuvent être pilotés par le processeur de l'unité de traitement 42 en fonction du programme d'ordinateur 43. Ces modules se présentent sous la forme de logiciels ou matériel, spécifiquement ou non dédiés à la mise en oeuvre de la présente technique.

De préférence, le deuxième message est transmis à un téléphone mobile de l'utilisateur sous la forme d'un message de type SMS ou MMS, en utilisant les données existantes nécessaires à la mise en oeuvre de la technologie de sécurisation « 3D Secure ». En effet, l'infrastructure (les serveurs) existante de la technologie 3D-Secure implémenté déjà par les banques permet d'envoyer des SMS à leurs clients. La technologie 3D-Secure est appelé *"Verified by Visa"* chez Visa, et *"SecureCode"* chez Mastercard. Il s'agit d'un protocole bancaire qui sera utilisé par le marchant lors d'un paiement électronique. L'objectif de ce protocole est de réaliser une authentification forte de la personne qui réaliser la transaction afin de s'assurer qu'elle est bien la propriétaire de la carte utilisée.

Pour réaliser l'authentification forte, le processus le plus utilisé est le suivant :
- L'utilisateur saisit ses données de paiement sur la page internet d'un commerçant ;
- le commerçant initie une transaction 3D-Secure via son acquéreur ;
- La banque émettrice transmet un mot de passe dynamique (OTP : « one-time password » en anglais) à l'utilisateur sur son téléphone portable via un SMS ;
- Le commerçant demande l'OTP à l'utilisateur pour valider la transaction (validation de la transaction si l'OTP saisi correspond à celui qui a été envoyé).

Ce processus de sécurisation des paiements sur internet est déployé et utilisé dans de nombreux pays. De ce fait les banques émettrices possèdent le numéro de téléphone portable de chacun de leurs clients et ont les outils pour maintenir cette base en fonction des changements de numéro de téléphone des utilisateurs.

Ainsi, la technique proposée peut réutiliser les serveurs de 3D-Secure déployés par les banques pour envoyer des messages SMS aux téléphones mobiles des utilisateurs. Le coût pour la mise en oeuvre de la technique proposée est donc largement réduit.

### 5.3. Serveur du commerçant

Le commerçant Mct dispose un serveur SvrM permettant de mettre en oeuvre un procédé de transmission de message de manière indirecte à un utilisateur Usr en utilisant au moins un service de transmission de données propre à un serveur SvrlBK d'un établissement bancaire IssuBK auprès duquel ledit utilisateur possède un compte bancaire.

Le procédé, mis en oeuvre par le serveur commerçant SrvM comprend :
- une étape de réception 33, du serveur SvrlBK de l'établissement bancaire IssuBK de l'utilisateur Usr, d'une requête d'obtention d'un message destiné à être transmise à l'utilisateur Usr ; la requête peut comprendre un identifiant d'une transaction financière effectuée par l'utilisateur Usr ; l'identifiant de la transaction permet au commerçant Mct d'identifier l'achat correspondant à la transaction et de générer une message correspondant à l'achat effectué par l'utilisateur Usr ;
   en fonction des modes de réalisation, la requête d'obtention du message peut avoir deux provenances:
   - soit cette requête provient directement du serveur SvrlBK de l'établissement bancaire IssuBK de l'utilisateur Usr, c'est-à-dire que le serveur SvrlBK a directement transmis cette requête au serveur du commerçant SvrM ;
   - soit cette requête provient du serveur SvrABK, appartenant à la banque du commerçant : la requête est alors relayée par le serveur SrvABK et provient indirectement du serveur SrvlBK ; il peut y avoir plusieurs raisons à ce relai effectué par le serveur de la banque du commerçant : par exemple, la banque du commerçant ne souhaite pas que la banque de l'utilisateur interagisse directement avec le commerçant (pour des raisons de bases de données de clientèle) ou encore car la banque de l'utilisateur ne souhaite pas mettre ne oeuvre une infrastructure de communication avec les serveurs des commerçants ;
   ainsi, en fonction des modes de réalisation, l'étape de réception de la requête d'obtention 33 peut être précédée d'une étape de transmission d'une requête initiale vers le serveur de l'établissement bancaire du commerçant ;
   - une étape de transmission 14 du message au serveur SvrlBK de l'établissement bancaire IssuBK de l'utilisateur Usr, ce message étant intégré au sein d'une réponse ; l'adresse du serveur SvrlBK de l'établissement bancaire IssuBK de l'utilisateur Usr peut être une adresse IP ou une adresse URL ; l'adresse IP peut être obtenu par le commerçant Mct, à la lecture de l'entête (dans les champs de adresse source) des trames IP ; l'adresse URL peut être comprise dans la requête transmise par le serveur SvrlBK de l'établissement bancaire IssuBK de l'utilisateur Usr ;
      de la même manière, en fonction des modes de réalisation, la réponse peut être relayée par l'intermédiaire du serveur SrvABK de l'établissement bancaire du commerçant.
      La figure 5 illustre une architecture matérielle du serveur SvrM du commerçant Mct. Cette architecture matérielle comprend un mémoire 51 constituée d'une mémoire tampon, une unité de traitement 52, équipée par exemple d'un microprocesseur, et pilotée par le programme d'ordinateur 53, mettant en oeuvre les étapes nécessaires du procédé de communication telle que décrites préalablement. A l'initialisation, les instructions de code du programme d'ordinateur 53 sont par exemple chargées dans une mémoire avant d'être exécutées par le processeur de l'unité de traitement 52. Le microprocesseur de l'unité de traitement 52 met en oeuvre les étapes du procédé de transmission, selon les instructions du programme d'ordinateur 52. Pour cela, le serveur SvrM du commerçant Mct comprend :
   - un module de réception, en provenance (directe ou indirecte) d'un serveur SvrlBK de l'établissement bancaire IssuBK d'un utilisateur Usr, d'une requête d'obtention d'un message destiné à être transmis à l'utilisateur Usr ;
   - un module de transmission de la donnée au serveur SvrlBK de l'établissement bancaire IssuBK de l'utilisateur.

Ces modules peuvent être pilotés par le processeur de l'unité de traitement 52 en fonction du programme d'ordinateur 53. Ces modules se présentent sous la forme de logiciels ou matériels, spécifiquement ou non dédiés à la mise en oeuvre de la présente technique.

### 5.4. Description d'un cas d'usage

On décrit ci-dessous, un mode de réalisation du procédé proposé lors d'un achat d'un billet de cinéma sur une borne libre-service de vente (ou de don). Cette borne libre-service (de vente ou de don à une association par exemple) comprend un terminal de paiement intégré.

Dans cet exemple, on considère qu'il s'agit d'une borne libre-service de ventes de places de cinéma. La borne libre-service comprend un écran tactile et un terminal de paiement POS muni de la fonctionnalité NFC. Sur l'écran tactile, les séances des films disponibles et les tarifs correspondants sont affichés. L'utilisateur peut choisir une séance d'un film et une place sur l'écran tactile de la borne. Pour effectuer le paiement, l'utilisateur peut simplement passer une carte de paiement ou un téléphone mobile muni(e) de la fonctionnalité NFC devant une zone de détection du terminal de paiement POS. Une demande de transaction au profit du commerçant est par la suite transmise à un serveur de transaction de la banque du commerçant (banque acquéreur AcquBK). Le serveur de transaction de la banque AcquBK du commerçant Mct valide la transaction et transmet une confirmation de la transaction à un serveur de la banque de l'utilisateur (banque émettrice IssuBK). Cette confirmation peut comprendre un numéro de la transaction effectuée et une adresse URL du serveur SvrM du commerçant. Bien évidemment, le compte débiteur dans la transaction est le compte de l'utilisateur auprès de la banque émettrice IssuBk. Le serveur SvrlBK de la banque de l'utilisateur (banque émettrice) peut accéder à une base de données comprenant les coordonnées de ses clients. Le serveur SvrlBK de la banque de l'utilisateur Usr peut lancer une recherche dans la base de données et obtenir le numéro de téléphone mobile de l'utilisateur à partir du numéro du compte de l'utilisateur Usr.

Après avoir reçu la confirmation de la transaction, le serveur SvrlBK de la banque de l'utilisateur Usr peut lancer une requête à l'adresse URL du serveur SvrM du commerçant Mct pour demander au commerçant Mct de fournir le contenu d'un message destinée à être envoyé à l'utilisateur Usr. La requête peut comprend le numéro de la transaction qui vient d'être confirmée. A la réception de la requête, le serveur SvrM du commerçant Mct identifie l'achat qui correspondant au numéro de transaction fourni dans la requête, et génère un message indiquant le numéro du billet, le montant facturé, l'adresse du cinéma (si nécessaire), la séance et/ou le numéro de la salle et/ou la place. Le message peut comprendre un lien, de type hypertexte, permettant d'obtenir des informations détaillées (synopsis et photos du film, code 2D du billet pour faciliter le contrôle, etc.) sur le billet de cinéma. Ce message est par la suite transmis au serveur SvrlBK de la banque IssuBK de l'utilisateur Usr.

A la réception du message, le serveur SvrlBK de la banque IssuBK de l'utilisateur Usr peut directement transmettre le message au téléphone mobile de l'utilisateur par SMS, MMS ou toute autre moyens de transmission de message adapté (par exemple une notification d'application mobile). La banque IssuBK peut également vérifier l'exactitude du montant facturé dans le message avant de le transmettre à l'utilisateur Usr. Si le montant facturé dans le message ne correspond pas au montant de la transaction confirmé, le serveur SvrlBK de la banque IssuBK de l'utilisateur peut avertir l'utilisateur par SMS. Cela permet à la banque et l'utilisateur de détecter des fraudes éventuelles des commerçants.

## Revendications

1. Procédé de transmission d'un message, ledit message émanant d'un serveur (SvrM) d'un commerçant (Mct), lequel souhaite transmettre ce message à un utilisateur (Usr) disposant d'un terminal de communication (CT), au moins une partie du contenu dudit message étant transmis audit terminal de communication (CT) de manière indirecte en utilisant au moins un service de transmission de données propre à un serveur (SvrlBK) d'un établissement bancaire (IssuBK) auprès duquel ledit utilisateur (Usr) possède un compte bancaire,
ledit procédé étant **caractérisé en ce que** les étapes suivantes, exécutées postérieurement à une étape de réception d'une confirmation d'une transaction financière, transaction financière effectuée entre ledit établissement bancaire (IssuBK) dudit utilisateur (Usr) et un établissement bancaire (AcquBK) dudit commerçant (Mct) :
- une étape de transmission, à un serveur (SvrM) dudit commerçant (Mct), d'une requête d'obtention dudit message ;
- une étape de réception, en provenance dudit serveur (SvrM) dudit commerçant (Mct), d'une réponse (Resp) contenant ledit message ;
- une étape de transmission, audit terminal de communication (CT) dudit utilisateur (Usr), d'un deuxième message (Msg#2) comprenant au moins une partie du contenu dudit message (Msg#1).

2. Procédé selon la revendication 1, **caractérisé en ce que** ledit service de transmission de données met en oeuvre un numéro de téléphone dudit utilisateur.

3. Procédé selon la revendication 1, **caractérisé en ce que** ledit service de transmission de données met en oeuvre une application de l'établissement bancaire (IssuBK), ladite application étant installée sur un terminal de communication dudit utilisateur.

4. Procédé selon la revendication1, **caractérisé en ce que** ladite confirmation comprend un identifiant dudit commerçant et un identifiant de ladite transaction.

5. Procédé de transmission selon la revendication 4, **caractérisé en ce que** ledit identifiant dudit commerçant comprend une adresse IP ou une adresse URL du serveur dudit commerçant.

6. Procédé de transmission selon l'une des revendications 1 à 5, **caractérisé en ce que** ledit message est transmis audit utilisateur sous une forme adaptée au dispositif de communication recevant ce message.

7. Serveur d'un établissement bancaire pour transmettre un message, ledit message émanant d'un commerçant, lequel souhaite transmettre cette information à un utilisateur disposant d'un terminal de communication, ledit serveur étant **caractérisé en ce que** ledit serveur comprend :
- un module de transmission, d'une requête de ladite donnée, à un serveur dudit commerçant ;
- un module de réception, en provenance dudit serveur dudit commerçant, de ladite donnée ;
- un module de transmission de ladite donnée audit terminal de communication dudit utilisateur.

8. Procédé de transmission d'un message de manière indirecte à un utilisateur en utilisant au moins un service de transmission de donnée propre à un serveur d'un établissement bancaire auprès duquel ledit utilisateur possède un compte bancaire, ledit procédé étant **caractérisé en ce qu'**il comprend :
- une étape de réception, en provenance d'un serveur dudit établissement bancaire dudit utilisateur, d'une requête de ladite donnée ;
- un étape de transmission de ladite donnée audit serveur dudit établissement bancaire dudit utilisateur.

9. Serveur d'un commerçant pour transmettre une message de manière indirecte à un utilisateur en utilisant au moins un service de transmission de donnée propre à un serveur d'un établissement bancaire auprès duquel ledit utilisateur possède un compte bancaire, ledit serveur étant **caractérisé en ce qu'**il comprend :
- un module de réception, en provenance d'un serveur dudit établissement bancaire dudit utilisateur d'une requête de ladite donnée ;
- un module de transmission de ladite donnée audit serveur dudit établissement bancaire dudit utilisateur.

10. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de communication selon la revendication 1 ou la revendication 8, lorsqu'il est exécuté par un processeur.
